# EUROPEAN PATENT APPLICATION

(11) **EP 2 096 586 A1**
(43) Date of publication of application: **02.09.2009**
(21) Application number: 07832819.2
(22) Date of filing: 29.11.2007
(51) Int. Cl.: G06Q 10/00, G06F 3/12

(54) **FORM MAKING SYSTEM, NETWORK SYSTEM USING SAME, AND FORM MAKING METHOD**

(30) Priority: 29.11.2006 JP 2006322636
(71) Applicant: Wingarc Technologies, INC., Tokyo 108-0075 (JP)
(72) Inventor: ABE, Tomo, Asahikawa-shi Hokkaido 071-8132 (JP)
(74) Representative: Manitz, Finsterwald & Partner GbR
(86) International application number: PCT/JP2007/073119
(87) International publication number: WO 2008/066142

(57) **Abstract**

Disclosed are a business form creating system that can easily create a business form with an attractive visual form (that is, viewable), a business form creating method, and a program. A business form creating system that creates a business form from information described or created in an electronic format includes: a business form output managing unit that calculates business form output information, which includes layout information of a business form to be output, on the basis of printing control data, which defines an output representation of at least one of data to be described in fields and records of the business form to be output, and print data having data to be described in the fields of the business form to be output; and a form file creating unit that creates a form file of the business form on the basis of the calculated business form output information. The business form is created using the form file.

## Description

### TECHNICAL FIELD

The present invention relates to a business form creating system that can easily create various business forms, to a network system using the same, and to a business form creating method. In particular, the present invention relates to a business form creating system that can easily create form files for creating business forms from data generated by programs to be operated in a mission-critical system or other applications, and can create attractive business forms using the least amount of steps, to a network system using the same, and to a business form creating method.

### BACKGROUND OF ART

Generally, the business forms have been created on the basis of data, which is created and managed by a mission-critical system, by a computer system. In the related art, in order to create the business form, two steps are needed. That is, a report form that defines the format of the business form to be output is first designed in detail, and then required data is set to correspond with the form file in various applications.

Information such as ruled lines that are used in the business form generally need to be developed by programs. Then, as different types of business forms are created, the number of steps is voluminously increased. Accordingly, in a known business form creating system, it takes a lot of time and effort to create the form file, which defines a business form image.

The improvement in a method of creating a printing format of a business form has been suggested in Patent Document 1 (Japanese Patent Application Laid-Open (JP-A) No.7-129689) or Patent Document 2 (JP-A No. 10-254984). According to the technologies described in the documents, print data is generated on the basis of a printing format, which is created to include printing position information of items to be printed on the business form or attribute information, such as the types of fonts of characters, and a data file having a group of data in the items. The generated print data is then printed to create the business form.

Particularly, Patent Document 1 (JP-A No. 7-129689) has suggested a business form printing format creating method. In this method, a business form, which has predetermined printing items to be printed and printing positions thereof, is compared with a coordinate registering paper, on which the coordinate values of the printing positions during printing are described. Then, printing instruction data including coordinate values of the printing items of the business form and printing length is set on the basis of the coordinate values of the coordinate registering paper. Subsequently, a printing format for printing the business form is created on the basis of the set printing instruction data. According to this method, it is possible to easily create a printing format that is correspondingly adapted for the business form, which has the predetermined printing items to be printed and printing positions thereof.

Patent Document 2 (JP-A No. 10-254984) discloses a business form creating method. In this method, a designated business form having a predetermined format, on which required items, such as ruled lines, are printed in advance, is displayed as an image. Then, a business form printing program is automatically prepared only by designating printing items and printing positions of data on the image. According to this method, a printing screen for the designated business form can be easily designed, without needing any specific knowledge for program preparation.

Meanwhile, in view of an output medium (output), such as a printed document, a technology that allows an attractive form has been suggested.

For example, Patent Document 3 (JP-A No. 5-35727) discloses an automatic line space adjusting method (called page equal spacing). In this method, when a line space during printing is smaller than a prescribed reference, the number of pages to be printed is increased and a plurality of pages are rearranged and printed, such that the printed document can be easily read. In the section 'Prior Art' of the above document, when a document file created by a document creating apparatus is printed, a document that slightly exceeds one page is printed in one page, or a document that is less than one page is printed to fill one page. Accordingly, a document within a designated line range of the document file is rearranged over the entire printing region of one page and printed during printing.

Patent Document 4 (JP-A No. 5-73562) has suggested a document editing apparatus. In this document editing apparatus, when the format of the document is changed to correspond to a different paper size from the original format, the margin, the character space, the line space, and the character size are automatically changed to correspond to the paper size by changing the character size of the document. Therefore, the document can be edited and printed without changing the layout of the entire document.

Patent Document 5 (JP-A No. 6-83830) has suggested a printing format setting apparatus. The printing format setting apparatus includes a format setting portion that sets a paper size, a margin, the number of characters per line, and the number of lines, and an arithmetical character size deciding portion that decides a character size from the paper size, the margin, the number of characters per line, and the number of lines set by the format setting unit, such that the characters are printed over the entire printing region of a single paper.

Patent Document 6 (JP-A No. 10-222509) has suggested a character processing apparatus. The character processing apparatus includes a format setting unit that, on the basis of the maximum number of digits and the maximum number of lines, sets a format by obtaining a line space and a digit space such that characters fit on the predetermined paper size previously designated by a paper size designation unit.

Patent Document 7 (JP-A No. 5-266013) has suggested a document page compression processing method. In this method, an inter-line pitch is calculated in order to compress the character lines of the final page into those of the previous page, and an inter-line pitch is changed within a prescribed range based on the calculated interline pitch. According to this method, a document file being created can be printed with the least number of pages.

Patent Document 8 (JP-A No. 9-69098) has suggested a document creating apparatus. This apparatus changes the layout of document data, which is deformed due to a change, on the basis of positional information ('right justification' or 'centering'). Then, the document is automatically re-edited on the basis of the positional information of each of the character strings in the document data. Therefore, it is possible to spare the effort for editing the document after the paper size is changed.

Patent Document 9 (JP-A No. 5-270097) has suggested a printing apparatus. The printing apparatus automatically changes (expand or reduce) the magnification of print data on the basis of the comparison result (ratio) of an output paper size, which is designated by printing information input from a host computer, with a paper size in the printing apparatus, thereby achieving optimal printing results.
Patent Document 1: JP application publication No. H7-129689)
Patent Document 2: JP application publication No. H10-254984)
Patent Document 3: JP application publication No. H 5-35727)
Patent Document 4: JP application publication No. H5-73562)
Patent Document 5: JP application publication No. H6-83830)
Patent Document 6 JP application publication No. H10-222509)
Patent Document 7: JP application publication No. H5-266013)
Patent Document 8: JP application publication No. H9-69098)
Patent Document 9: JP application publication No. H5-270097)

### DISCLOSURE OF THE INVENTION

### OBJECTIVES OF THE INVENTION

As described above, in order to create the business form with the computer system, the form file that describes the information, such as the layout, is needed. Accordingly, it takes a lot of time and effort to create and design the form file. In the related art, like Patent Documents 1 and 2, there is a method that simplifies an operation to create the form file or an operation to associate with data to be printed on the business form. However, these operations cannot be omitted.

Accordingly, it is an objective of the invention to provide a business form creating system, a business form creating method, and a program, which can create a business form while reducing the amount of work in creating a form file or removing an operation to associate data to be printed on the business form.

Furthermore, a method that allows a printed document to be output with an attractive visual form (that is, a method that creates a viewable printed document) has been suggested in Patent Documents 3 to 9. However, there is no technology that automatically adjusts the margin, the character space, the line space, the character size, and the layout of the entire document in order to output given data with an attractive visual form. In addition, in view of a 'business form' that is created by writing required data (characters or numeric values) into the items (fields) of a blank format, in which the ruled lines are printed, there is no technology that adjusts the entire form or the format of the fields or records in order to realize an attractive visual form.

Accordingly, it is another objective of the invention to provide a business form creating system, a business form creating method, and a program, which can output a business form with a visually accurate quality (viewable) while focusing on an output format specific to a business form. It is still another objective of the invention to provide a business form creating system, a business form creating method, and a program, which can easily create an attractive business form.

### MEANS TO ACHIEVE THE OBJECTIVES

In order to solve at least one of the above-described objectives, aspects of the invention provide a business form creating system, a network system using the same, and a business form creating method.

According to a first aspect of the invention, there is provided a business form creating system that creates a business form from information described or created in an electronic format, or creates a business form from information described in a data file. The business form creating system includes a business form output managing unit that calculates business form output information, which includes layout information of a business form to be output, on the basis of printing control data, which defines an output representation of at least one of data to be described in fields and records of the business form to be output, and print data having data to be described in the fields of the business form to be output; and a form file creating unit that creates a form file of the business form on the basis of the calculated business form output information. The business form is created using the form file.

The business form creating system is specifically formed with a computer, and is composed of a memory that records various data and/or programs, a CPU that is operated according to the instruction from the programs, and an interface that outputs a business form. In addition, the computer that forms the business form creating system is not necessarily a stand-alone type, but it may be incorporated into a printing apparatus. Furthermore, the business form creating system may include a business form creating unit that creates the business form from the form file created by the form file creating unit and the print data.

In the business form creating system according to the first aspect of the invention, the business form output managing unit may calculate the layout information, printing position information, and printing paper size and direction such that the output result of the business form fits in a printing region width of a normal printing paper.

The business form output managing unit may calculate the business form output information including the layout information of the business form on the basis of any one or all of the following information (1) to (5) acquired or calculated from the printing control data and print data. With this configuration, the viewability of the business form to be output can be improved.
(1) number-of-digits information of printing object data per column in the business form to be output,
(2) line attribute information for identifying whether each line is a header or body in the business form to be output,
(3) column number-of-digits calculation reference information for identifying whether or not the number of digits of a specific column is calculated based on all lines, lines excluding a header line, or body lines,
(4) font information including font size and pitch to be used in business form output, and
(5) processing information of out-of-printing width for specifying a processing when data to be output in each record exceeds a column width.

A business form creating network system that can create a business form via a network can be implemented by connecting the business form creating system on a network.

According to a second aspect of the invention, there is provided a business form creating network system, in which a business form data processing system (client), which includes print data described in fields of a business form to be output, and any one of the above-described business form creating systems (server) are connected with each other via a network. The business form data processing system transmits the created print data to the business form creating system via the network. The business form creating system calculates business form output information using the print data received from the business form data processing system, and then creates a form file of the business form. The business form creating system in turn creates the business form in an electronic format on the basis of the created form file of the business form and the print data, and transmits the created business form to the business form data processing system. The business form in the electronic format is used to exclude a business form that is printed on a paper medium, and includes a PDF format electronic file or an electronic file as bit-map format, TIFF format, GIF format, or JPEG format image data.

In order to solve at least one of the above-described objects, there is provided a business form creating method that can easily create a business form using a computer.

According to a third aspect of the invention, a business form creating method includes calculating business form output information, which includes layout information of a business form to be output, on the basis of printing control data, which defines an output representation of at least one of data to be described in fields and records of the business form to be output, and print data having data to be described in the fields of the business form to be output; creating a form file of the business form on the basis of the calculated business form output information; and creating the business form using the form file.

In the business form creating method according to the third aspect of the invention, the form file of the business form may be created on the basis of output representation information for at least one of fields and records in the calculated business form output information.

The business form creating method according to the third aspect of the invention may further include calculating and estimating an output format when the business form output information including the layout information of the business form is calculated by a business form output managing unit. In the calculating and estimating of the output format, the business form output managing unit may determine whether or not the business form output information created from the printing control data and print data meets a predetermined reference. Here, if the business form output information meets the reference, the business form is created using the business form output information, and if the business form output information does not meet the reference, the calculating and estimating of the output format is repeatedly performed by changing one of the setting items (including the output paper size) in the printing control data.

There is also provided a program that causes a computer to execute the above-described business form creating method. According to a fourth aspect of the invention, a program causes a computer to execute: calculating business form output information, which includes layout information of a business form to be output, on the basis of printing control data, which defines an output representation of at least one of data to be described in fields and records of the business form to be output, and print data having data to be described in the fields of the business form to be output; creating a form file of the business form on the basis of the calculated business form output information; and creating the business form using the form file.

### EFFECT OF THE INVENTION

According to the aspects of the invention, the business form output managing unit calculates the business form output information required to create the form file only by transmitting the print data and the printing control data to the business form output managing unit. Then, the calculated business form output information is transmitted to the form file creating unit so as to create the form file. Therefore, a business form creating system, business form creating method, and a program, which can create the business form while saving a trouble in creating a form file or removing an operation to associate with data to be printed on a business form, can be provided.

Furthermore, in the business form output managing unit, on an assumption that a business form to be output has an attractive visual form (that is, a viewable business form is created), all parameters (parameters in the business form output information) for representation formats of a business form to be created, such as the margin, the character space, the line space, the character size, and the layout of the entire document are created. Then, the form file is created on the basis of the generated parameters. Therefore, a business form creating system, a business form creating method, and a program, which can easily create an attractive (that is, viewable) business form, can be provided.

### BEST MODE FOR CARRYING OUT THE INVENTION

### <First Embodiment>

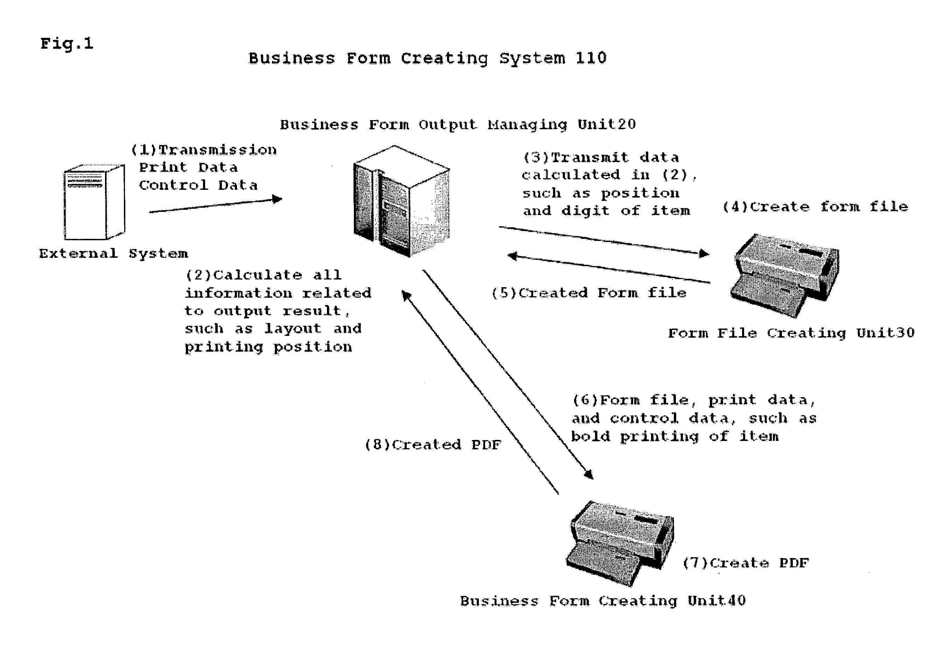

First, a business form creating system according to an embodiment of the invention will be described with reference to Fig. 1. The business form creating system 110 according to this embodiment is formed with a computer, and arranges and output print data, which is created by a business application or other application programs, in a format of a business form.

In this embodiment, the business form creating system 110 includes a business form output managing unit 20 that calculates business form output information including layout information of a business form; a form file creating unit 30 that creates a form file, which is to be used when the business form is created, on the basis of the business form output information; and a business form creating unit 40 that creates the business form from the form file and the print data and outputs the business form.

The business form output managing unit 20 receives 'print data', which is segmented per character string to be described in each field of a business form to be output, for example, in CSV format or various text formats, and 'printing control data', which defines a character size, a character space, a printing position, and the number of printing digits specified in the print data on a field, record, or file basis from an external system, which is connected therewith via a network, such as Internet, WAN, or LAN. Then, the business form output managing unit 20 calculates all information, such as the layout, the printing positions, and the like, related to an output result to create the business form according to a following procedure. The calculated information preferably lays focus on the viewability of the business form to be output. Specifically, when the business form exceeds the paper size, preferably, line feed position information, page feed position information, and maximum width information are calculated by an arithmetic operation, and output information for each item, such as expansion/reduction display information of fonts, information for defining whether or not it is a line break display mode, or information for defining whether or not display is performed with a designated number of digits.

The form file creating unit 30 receives the information calculated by the business form output managing unit 20, and creates a form file of the business form to be output on the basis of the information. The form file includes information on representation (layout) of a business form to be created, information of representation (a font size, a space, or the number of digits) of each field, and information on association of each field with the print data. It is generally the same as a form file that is developed and created for each system or application by a user in the related art. That is, in the business form creating system 110 according to the embodiment of the invention, the form file can be created by cooperation of the business form output managing unit 20 and the form file creating unit 30, without needing a manual operation. In addition, the information that is calculated by the business form output managing unit 20 is calculated while laying focus on the viewability of the business form to be output. Accordingly, the form file that is created by the cooperation of the business form output managing unit 20 and the form file creating unit 30 can be easily read by a user.

The business form creating unit 40 combines the created form file and the print data from the external system or the printing control data, such as bold printing of the items, and outputs the business form. The created business form may be recorded on a paper medium or may be in an electronic format. When the business form is printed on the paper medium, it may be printed using a separate printing apparatus. In addition, when the business form is in the electronic format, it may be transmitted to the external system via the business form output managing unit 20 or directly. Therefore, in case of the business form creating system 110 that creates an electronic format business form, a data transmitting unit may be additionally provided.

Moreover, even though the business form output managing unit 20, the form file creating unit 30, and the business form creating unit 40 are implemented by separate hardware to illustrate the functions of the units in Fig. 1, any units or all units may be implemented by single hardware, and not as separate hardware.

Next, the printing control data that is acquired by the business form output managing unit 20 is clearly established. That is, the following items are set. If necessary, a default value is set in each item. Moreover, when the user does not set the setting items, the default value may be set, and a setting item for setting the default value may be provided. Furthermore, when the business form is created on the basis of the default value, if the default value is stored in the business form creating system, the external system may only transmit the print data to the business form creating system when the business form is created.

### [Setting Items in Printing Control Data]

### (1) Paper Setting Item

This item may include the following information: paper size setting information for defining the size of a paper, on which a business form is output (normal size or continuous business form); in case of the continuous business form, continuous business form length (and/or width) setting information for setting the length (and/or width) thereof; paper direction setting information for setting whether a paper direction is landscape or portrait; and margin setting information for setting the margin of the paper (top, bottom, left, and right).

### (2) Printing Layout Item

This item may include the following information: title information for defining a title, which is displayed on a business form to be output; comment information defining comments, graph presence/absence information for defining presence/absence of graphs; page feed direction information for defining whether a page feed direction is horizontal or vertical; when a business form to be output exceeds the paper size set in the paper size setting item, operation information during page overflow for defining whether a page feed or a line feed is performed; field margin information for defining how much margin is provided in each field of the business form to be output, printing position information for defining whether data is displayed on a field or record of the business form to be output according to left alignment, right alignment, centering, or equal spacing; stripe setting information for defining a color pattern (including grayscale), brightness, a filling color or a filling line during output; and line feed space information for designating the number of lines of a line feed space.

### (3) Line/Column Attribute and Detailed Setting Item

This item may include the following information: attribute setting information for identifying each line and/or column in the business form to be output is a body portion displaying data, displays the sum, or displays a header; display/non-display setting information for defining whether or not to display each line and/or column; display/non-display setting information for defining a title of each line and/or column; line/column title information for defining the title of each line and/or column; group suppression information for defining whether or not to perform group suppression in order to remove duplicate data or ruled lines; vertical printing position information during group suppression for specifying whether a vertical printing position during group suppression is superscript, subscript, or center; and horizontal printing position information during group suppression for specifying whether a horizontal printing position during group suppression is subject to left alignment, right alignment, centering, or equal spacing.

### (4) Column Width Determining Method/Calculation Reference Item

This item may include the following information: number-of-digits information on the number of digits of printing object data per column; line attribute information for specifying whether each line is a header, normal data, or the sum; column number-of-digits calculation reference information for selecting whether to take all lines, lines excluding the header line, or only the normal data into account in order to calculate the number of digits of a specific column; data output font information for calculating the width of each line and/or column on the basis of information on a font to be used when data is output on the business form (including a font attribute, such as a font size or a font pitch) and print data; when output data exceeds the column width, over-printing width handling item information for designating whether to print as much as possible and cut the overflow portion, to break the overflow portion and display multiple lines, to adjust the font size such that the entire data can be displayed, or to expand the column width to the printing width (display width); and number-of-printing digits information, which can be designated by the user. Moreover, the column width calculation method will be described below.

### (5) Display Setting Item

This item may include the following information: font information for defining the font size, font type, font style (bold, italic, or underline), and font color; background information for defining whether or not to print the background, what background pattern (monochrome, color, or grayscale) is used, how much brightness when the gray scale background, or what color is used in case of color; and ruled line information for defining an object, in which the ruled lines, such as a table outline, a vertical line per column, a horizontal line per line, are set (including whether or not to install the ruled lines), and when the ruled lines are installed, the thickness, types (solid line or broken line), and colors.

### (6) Control Item during Data Break

This item defines whether or not to perform grouping in a specific line or in a column basis to be displayed on the business form. The item may include data break processing information for defining whether or not to break data in a predetermined line and/or column in order to perform page feed or line feed. The details of a processing method thereof will be described below.

### (7) Control Item during Data Overflow

This item may include control information during data overflow for defining whether to perform page feed, line feed, or paragraph feed when data overflows in each field. The details of a procedure thereof will be described below.

### (8) Header and Footer Item

This item defines various kinds of information that are output to the header and the footer. The item may include information on output date and time, sort information of each line or each column, data refinement information, and information on a server name, a database name, a table/view name, a name of a final updater of a definition file, and date and time when a definition file is finally updated.

### (9) Graph and Image Output Item

This item may include the following information: graph output information for defining a fixed graph pattern, which defines whether a graph output page in the business form is output to a first page, a last page, an exclusiveuse page (first output), or an exclusive-use page (last output), or a variable graph pattern, which defines whether a graph output page is output to the same page as the table, at the head of the exclusive-use page, or the last page when a graph is output; and image output information for defining what arrangement is used to allocate various images. Moreover, in setting this item, when the fixed graph pattern defines that the graph output page is output to the first page/last page, in case of a page, on which a graph is not output, the printing range of the table may be automatically expanded to the definition range of the graph.

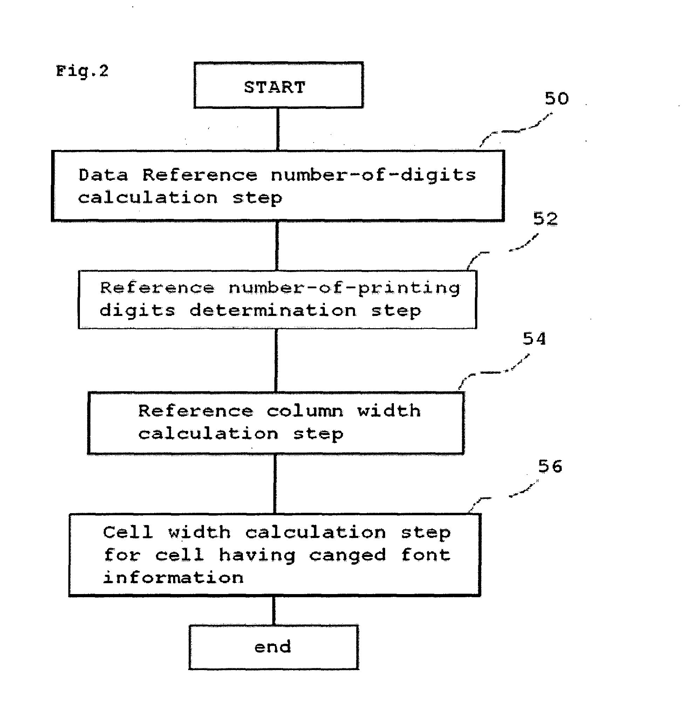

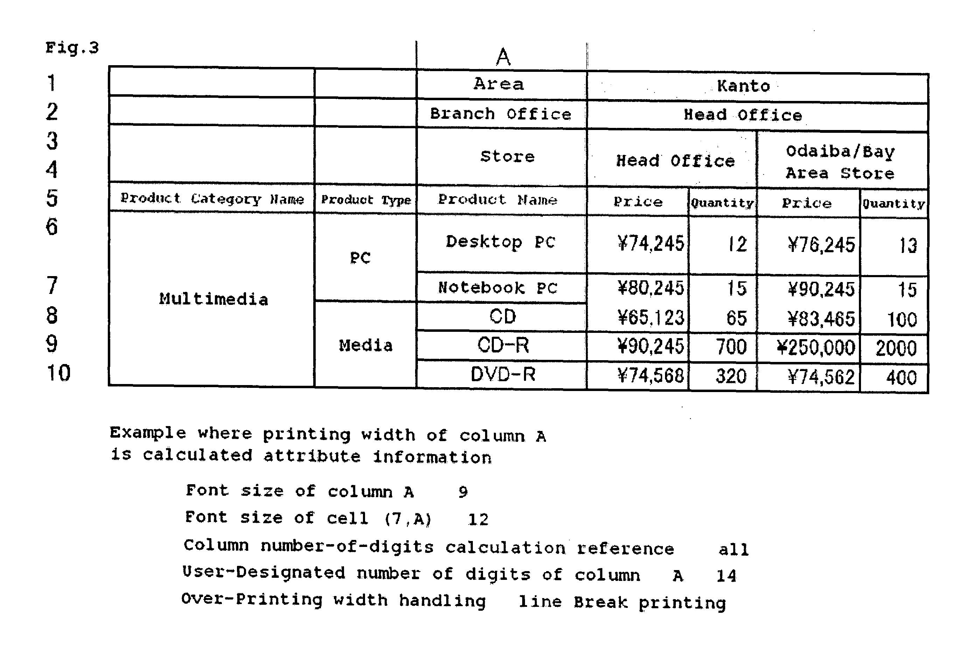

The business form output managing unit 20 calculates all information related to the output result, such as the layout or the printing position, according to the user setting items set for any one of all of the items (1) to (9), such that the business form to be output can be easily read. For example, a process of calculating the column width in the business form to be output will be described with reference to a flowchart of Fig. 2 and an exemplary column width calculation of Fig. 3.

### [Exemplary Procedure of Business Form Output Managing Unit (Column Width Determining Method/Calculation Reference Item)]

When referring to the column width in the business form to be output, the business form output managing unit 20 calculates the column width on the basis of the abovedescribed printing control data or print information by the following process.

### (1) Data Reference Number-of-Digits Calculation Step 50

In Step 50, the number of printing digits (A) of an object column is determined from the number of digits, line attribute, and the number-of-digits calculation reference of the data in the above-described printing control data. For example, in the table shown in Fig. 3, when the column width of a column A is calculated, the maximum data calculated from the print data is 20 digits of a cell {6,A}.

### (2) Reference Number-of-Printing Digits Determination step 52

The number of printing digits of the corresponding column is determined from the number of digits (A) calculated in the (1) data reference number-of-digits calculation step 50, the over-printing width handling information in the printing control data, and the userdesignated number of digits. That is, when the userdesignated number of digits is not designated, the number of digits (A) calculated in the (1) data reference numberof-digits calculation step is set as the reference number of printing digits. When the user-designated number of digits (B) in the printing control data is designated, if it is selected to cut the overflow portion during overflow, if it is selected to perform line break during overflow, and if it is selected to perform font resize (change the font size), the user-designated number of digits (B) is set as the reference number of printing digits. Meanwhile, when it is selected to expand the printing width, the number of digits (A) calculated in the (1) data reference number-of-digits calculation step is set as the reference number of printing digits. The reference number of printing digits calculated in this step is (C).
This processing will now be described with reference to the table shown in Fig. 3. Here, since 'line break when overflow' is set as the printing attribute, the userdesigned number of digits, that is, 14 digits, is calculated and set as the reference number-of-printing digits of the column A.

### (3) Reference Column Width Calculation Step 54

The printing width (D) is calculated from the reference number of printing digits (c) calculated and set in the (2) reference number-of-printing digits determination step 52 and the font information in the above-described printing control data. Referring to the table shown in Fig. 3, the pulse width of 150 dots is calculated from the reference printing width (14 digits) specified in the previous step and the font information of the column A.

### (4) Cell Width Calculation Step 56 for Cell Having Changed Font Information

When there is a cell having changed font information in accordance with the printing width (D) set by the (3) reference column width calculation step 54, the printing width of the corresponding cell is calculated. When the calculated printing width exceeds the printing width (d) calculated in the (3) reference column width calculation step, the printing width (E) calculated in this step is set as the reference column width. Referring to the table shown in Fig. 3, the printing width of a cell {7,A} is set to 180 dots from the printing characters 14 digits and the font size 12 pt. Since this printing width is larger than the reference width 150 dots calculated in the (3) reference column width calculation step 54, the printing width 180 dots calculated in this step is set and calculated as the reference column width.

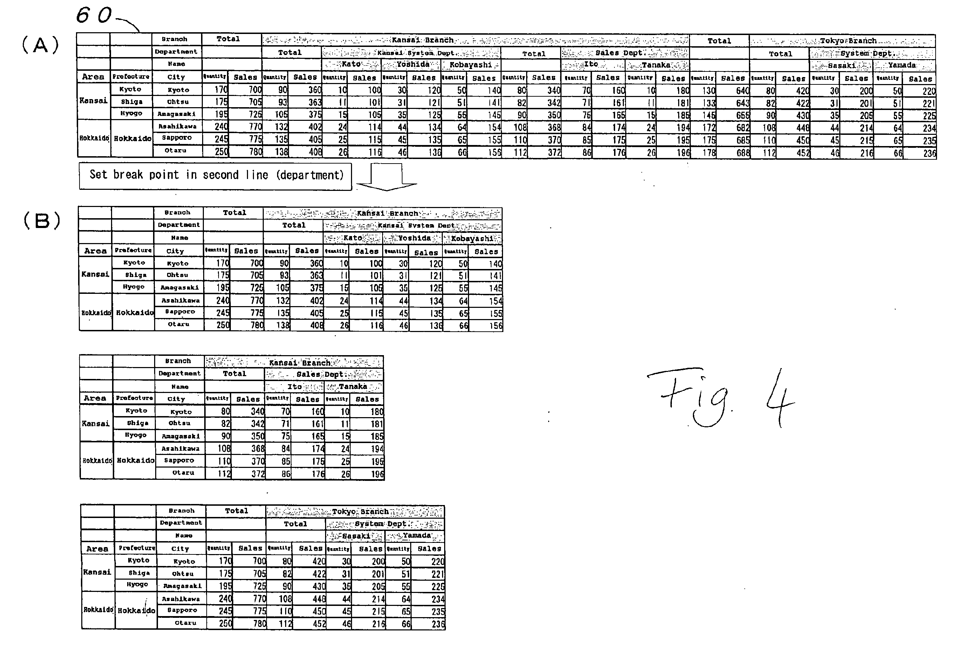

Through the above-described processing, the printing width of the specific column is calculated. In addition, the information calculated through the above-described processing is transmitted to the form file creating unit 30, and the form file creating unit 30 creates the business form, which is subjected to the processing shown in Figs. 4 to 17. Hereinafter, the processing in the business form creating system 110 according to this embodiment will be described in detail.

### [Processing in Business Form Creating System]

In the business form creating system 110 according to this embodiment, the business form output managing unit 20, the form file creating unit 30, and the business form creating unit 40 operates in cooperation to perform the following processing. Moreover, the business form creating system 110 according to the embodiment of the invention can implement the following processing in cooperation with the programs, which are constructed to achieve the advantages of the individual units, and hardware (hardware including the memory or the CPU, which forms the business form creating system 110), which executes the processing and commands of the programs.

### (1) Line Feed Processing during Data Break

The business form creating system 110 according to this embodiment can perform a processing of grouping in a specific line or column basis on the business form on the basis of the settings of the control item during data break among the setting items in the printing control data, thereby improving the viewability of the business form to be output. For example, Figs. 4A and 4B show a case where a processing during data break is set as 'Line Feed', and a data break point is set to an item 60, 'Department', in the second line. To the contrary, when the data break processing is not set, as shown in Fig. 4A, a table is continuously output in a horizontal direction. However, as described above, if the control item during data break is set, the table is output while being cut at the item 'Department' in the second line (Fig. 4B).

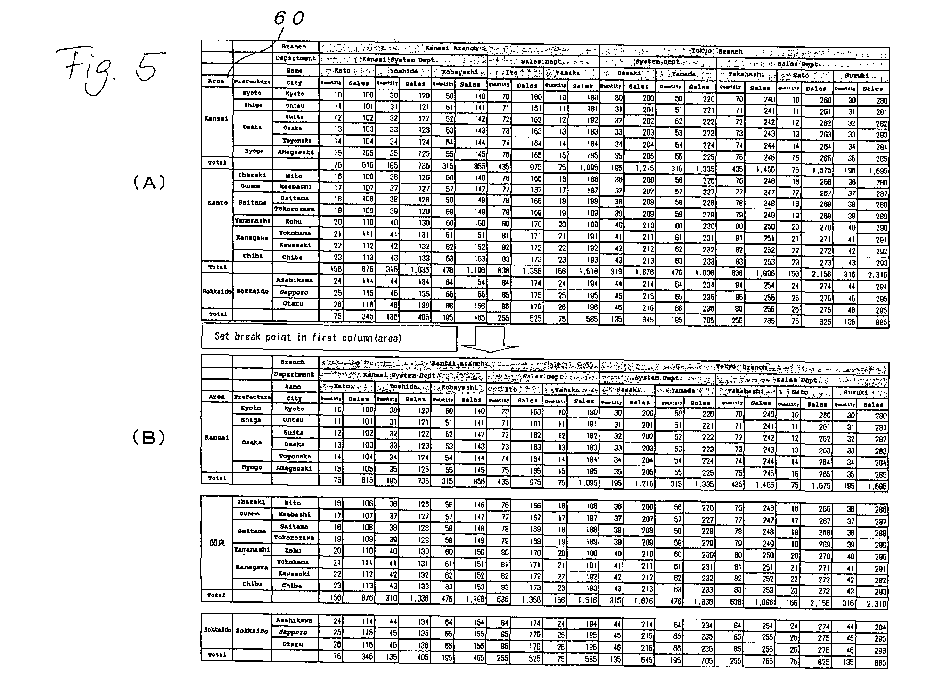

Figs. 5A and 5B show a case where the control item during data break is set as 'Line Direction', and the break point is set to an item 62, 'Area', in the first column. A table that, as shown in Fig. 5A, was continuously output if the data break processing is not performed is output while being cut at the item 'Area' in the first column (Fig. 5B).

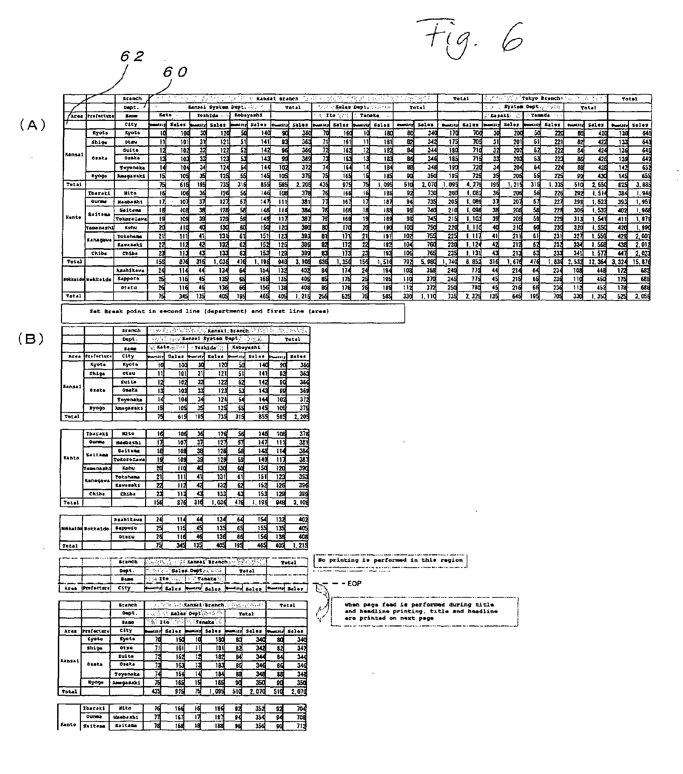

The break point may be set to both the line and column of the business form to be output. For example, as shown in Figs. 6A and 6B, when the break point is set to an item 60, 'Department', in the second line and an item 62, 'Area' in the first column, a business form that, as shown in Fig. 6A, should be output as a single business form is output as tables that are cut at the individual break points, as shown in Fig. 6B. Here, when the page feed is suppressed by the title or the headline of the business form, the title or the headline may be printed on the next page, thereby improving the viewability of the business form to be output.

In the processing during data break, a line feed code may be inserted as a processing code (line feed may be performed). In addition, a page feed code may be inserted as a processing code (page feed may be performed) such that page feed is performed at each data break.

### (2) Control during Data Overflow

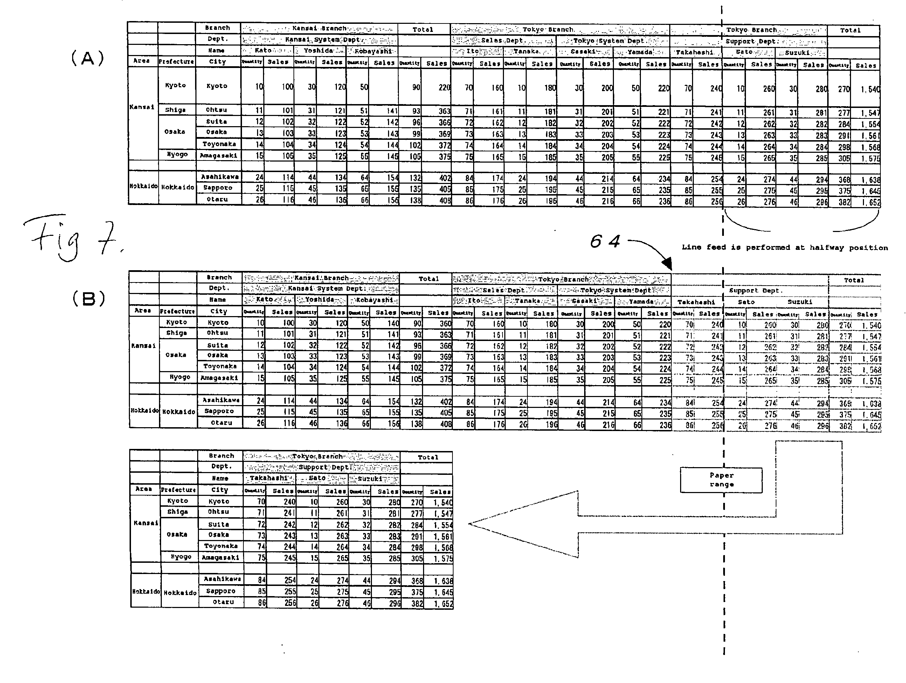

The business form creating system 110 according to this embodiment can perform a processing of performing line feed, page feed, or paragraph feed on the basis of the settings of the control item during data overflow among the setting items in the printing control data when data overflows each field, thereby improving the viewability of the business form to be output. For example, referring to Figs. 7A and 7B, if a business form is created without performing the control during overflow, a portion that does not fit in the printing region of the printing paper is line-fed at a halfway position (see Fig. 7A). Accordingly, the business form creating system 110 line-feeds the portion, which does not fit in the printing region of the printing paper, by inserting a line feed code at an appropriate break position 64 therebefore on the basis of the arithmetic result of the business form output managing unit 20 according to various setting items is used, as shown in Fig. 7B, thereby improving the viewability of the business form to be output. In this embodiment, line feed is performed at the item 'Department' in the second line. In addition, the control during data overflow is not limited to the case where column data overflows, as shown in the drawings, but it may also be performed when line data overflows.

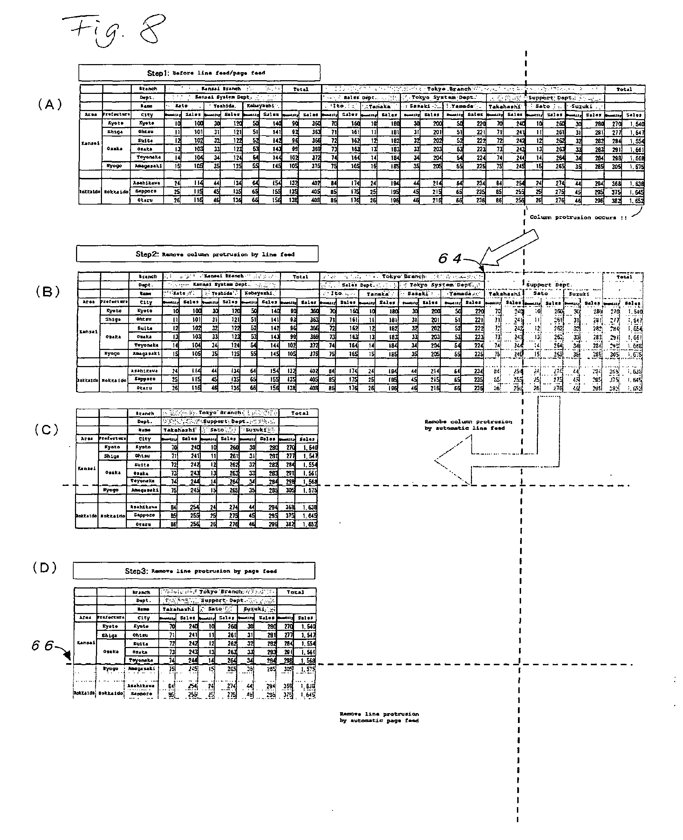

Fig 8 shows a processing when line data and column data overflow. As shown in Fig. 8A, the portion that does not fit in the printing region of the printing paper is line-fed at the appropriate break position 64 to remove column protrusion (Fig. 8B). In Fig. 8B, line feed is performed at the item 'Department' in the second column. With this line fed, when the line protrusion occurs in a table newly displayed below (Fig. 8C), page feed is performed at the appropriate break position 64 to remove the line protrusion (Fig. 8D). That is, in this embodiment, a viewable business form can be created by specifying whether to perform line feed or page feed, together with the output format (paper size and the like).

### [Maximum Configuration Processing]

In the business form creating system 110 according to this embodiment, the business form output managing unit 20, the form file creating unit 30, and the business form creating unit 40 automatically edit the attributes of the individual items in cooperation such that the business form can be printed on a single paper. That is, the business form output managing unit 20 performs an arithmetic operation on any one or at least two of the setting items in the printing control data, reflects the result to overwrite the printing control data, and creates a form file such that the business form can be printed on a single paper. For example, the arithmetic result of the entire default font size, the type of printing paper (normal paper size), the column number-of-digits calculation reference, the number of digits of the column, and the processing when the characters in the column overflow by the business form output managing unit 20 is reflected, and the form file and the business form are created on the basis of the result.

When the maximum configuration processing is performed, any one or a combination of the following steps (a) to (c) may be applied such that the print data can be output within a single paper.

### (a) The number of display digits of the column is reduced to print the overflow portion with reduced magnification.

That is, an arithmetic operation is performed to reduce the printing width of each column by changing or using the settings in the business form to be output on the column number-of-digits calculation reference, the number of digits of the column, and the processing when the characters overflow in the column. With this processing, the printing width can be reduced depending on a difference between the default font size and the minimum font size, and the maximum number of digits of the column data.

### (b) The default font size is reduced to the minimum font size.

An arithmetic operation is performed to reduce the printing width by setting the minimum font size within a range of prescribed usable font sizes as the entire default font size. In this processing, the printing width can be reduced depending on the default font size and the minimum font size. Particularly, with this processing, a larger region can be secured, compared with '(a) the number of display digits of the column is reduced to print the overflow portion with reduced magnification'. In this case, however, the number of display digits of the column may be excessively reduced, and a wasteful region may be generated.

### (c) The paper size is set to next large size.

The type of printing paper (normal paper size) is set to one having larger size. For example, when an original printing paper is A4 size, the paper size may be changed to next large size, that is, A3 size. When the original printing paper is B5 size, the paper size may be changed to B4 size. In addition, when the original printing paper is a B5 size, the paper size may be changed to larger size, that is, A4 size. In this way, the paper size may be changed according to the paper standard.

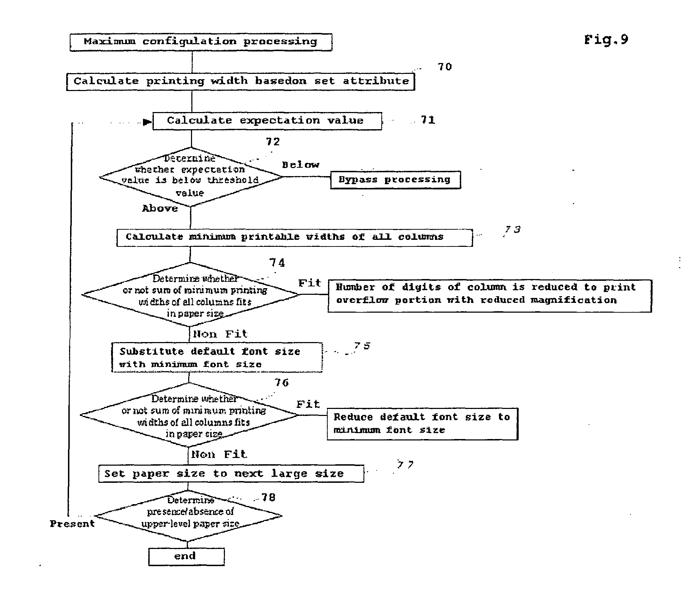

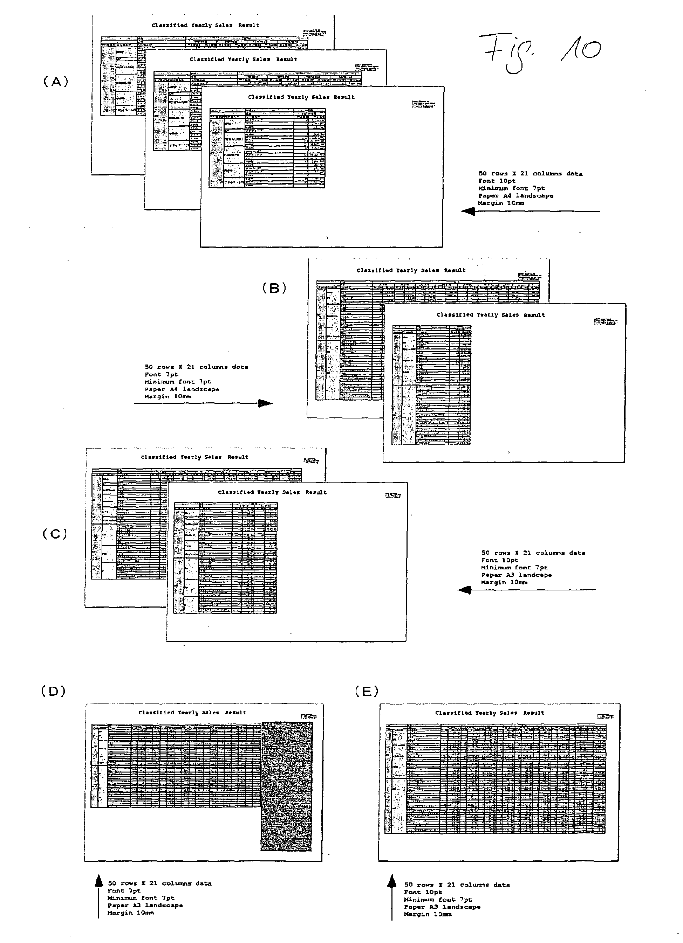

The above-described processing method is performed on the basis of the following steps (see a flowchart shown in Fig. 9, and Figs. 10A to 10E), thereby calculating the configuration of the business form.

(1) The printing width is calculated on the basis of the set attributes (that is, the attributes set by the setting items in the printing control data) as they are (Step 70).

(2) A reduction expectation value is calculated from the printing paper width and the printing width, the default font and the minimum font size according to the following equation (Step 71). When the expectation value is less than a threshold value, in the maximum configuration processing, determination is performed such that the steps (a) to (c) are bypassed (Step 72). $E ⁢ x ⁢ p ⁢ e ⁢ c ⁢ t ⁢ a ⁢ t ⁢ i ⁢ o ⁢ n V ⁢ a ⁢ l ⁢ u ⁢ e = \left(P⁢a⁢p⁢e⁢r W⁢i⁢d⁢t⁢h\div P⁢r⁢int⁢i⁢n⁢g W⁢i⁢d⁢t⁢h\right) \times \left(D⁢e⁢f⁢a⁢u⁢l⁢t F⁢o⁢n⁢t S⁢i⁢z⁢e\div M⁢i⁢n⁢i⁢m⁢u⁢m F⁢o⁢n⁢t S⁢i⁢z⁢e\right)$

(3) The minimum printable widths of all of the columns are calculated (Step 73). Each of the minimum printable widths can be calculated from the maximum number of digits and the minimum font size in each column.

(4) It is determined whether or not the sum of the minimum printable widths of all of the columns fits in the paper size (Step 70). When the sum fits in the paper size, the step '(a) The number of display digits of the column is reduced to print the overflow portion with reduced magnification' is performed. Here, the attributes may be sequentially set from a column having a small reduced width, and when the reduced width fits in the paper, subsequent settings may be stopped.

(5) The default font size is substituted with the minimum font size (Step 75), and it is determined whether or not the sum of all of the minimum printing widths fits in a single printing paper (Step 76). When the sum fits in a single printing paper, the step '(b) The default font size is reduced to the minimum font size' is performed.

(6) It is determined whether or not a next large paper size is present (Step 78). If the next large size is present, the paper size is set to the next large size, and then the process returns to Step 71 of the foregoing (2) in the maximum configuration processing. In Step 78, when an upper-level paper (a paper having a larger size) is not present, a series of steps end. Particularly, in the business form creating system 110 according to the embodiment of the invention, printing is not performed in a state where the paper size is increased. That is, after the paper size is increased, the processing after the foregoing (2) is repeatedly performed such that the sum fits in the paper size, thereby easily creating the business form having an optimal format (that is, viewable format).

To implement the foregoing processing, described is a case where 50 rows × 21 columns of data is output on an A4 size printing paper (landscape) in which the font size is 10 pt, the minimum font size is 7 pt, and the left and right margin are 10 mm (See Fig. 10A).

To set the output format of the given specific example, first, it is calculated according to the above-described settings to which page the business form is output. As a result, when an arithmetic result that the business form to be output is output over three pages is obtained (Fig. 10A), the character size is next changed, and it is then determined to which page the business form is output. In this embodiment, as shown in Fig. 10B, after the font size is reduced to 7 pt, and it is then determined as a result, the number of pages of the business form to be created. In this example, since the determination result that the business form is output with more than two pages, even if the font size is reduced is obtained, the next paper size is set larger. That is, in the business form creating system 110 according to this embodiment, the business form output managing unit 20 is configured to select the size of the business form to be output from the arithmetic result in the business form output managing unit 20. In this example, as shown in Fig. 10C, when the business form is output on the conditions that the paper size is A3 size (landscape) again, and 50 rows × 21 columns data is output to the A3 size printing paper (landscape), in which the font size is 10 pt, the minimum font size is 7 pt, and the left and right margins are 10 mm, the number of output pages is calculated and determined. In this case, however, an arithmetic result that the business form is still output over two pages is obtained, and it does not meet the determination result that the business form is output in one page. Accordingly, the format is calculated when the business form is output on the condition that the font size is changed to the minimum font size 7 pt again (Fig. 10D).

As a result, the business form to be output fits in a single page, and in turn a wasteful region (blank region) occurs in the A3 size paper. Accordingly, an arithmetic operation is performed in a state where only the font size of a prescribed column is expanded such that the business form to be created fits in one page, and the result is determined. In this example, since the determination result that the business form to be output is output to finely fit in one page is obtained, the form file is created on the basis of that data, and the business form is created using the form file (Fig. 10E).
The business form output managing unit 20 may be configured to perform the following processing.

### [Block Arrangement Change Processing]

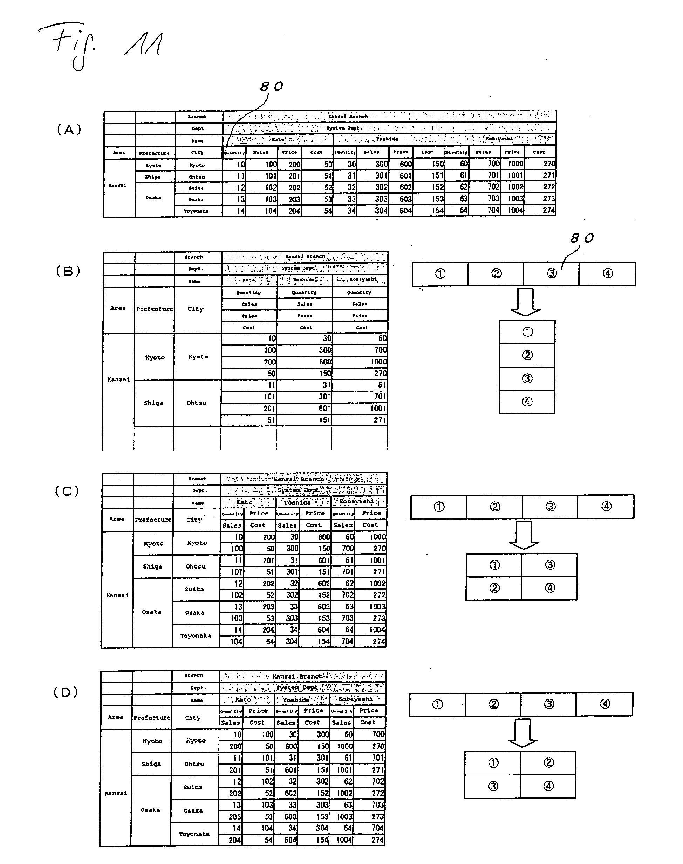

According to this embodiment, the block arrangement change processing is performed on a predetermined header among the display items in the business form to be output, and preferably a last header 80. Specifically, as shown in Figs. 11A to 11D, the arrangement of the header portion that displays the title of each column is changed. In the example shown in Figs. 11A to 11D, the header information shown in Fig. 11A that is arranged long in a row direction by 1 row × 4 columns is arranged long in a column direction by 4 rows × 1 column, as shown in Fig. 11B. In addition, in Figs. 11C and 11D, the header portion is arranged by 2 rows × 2 columns. Particularly, as shown in Figs. 11C and 11D, the arrangement of each item may be changed. How the header portion is arranged may be appropriately adjusted according to the type or purpose of the business form to be output, or the type of information (title) to be output in the changed header portion.

Particularly, the number of digits per line of the business form to be output is changed by changing the arrangement of a specific header in this way. Accordingly, the user can select the format of the easiest-to-read business form according to the purposes.

The block arrangement change processing may be practically performed in the business form output managing unit 20 among the components of the business form creating system 110 according to this embodiment. The settings on the arrangement of the blocks may be included in the items of the printing control data.

### [Graph Output Processing]

A graph output processing according to this embodiment is to set at which position and how a graph 81, which is obtained by graphicizing numeric data of a spreadsheet described in the business form to be created, is displayed in the business form. This processing may be practically performed in the business form output managing unit 20 among the components of the business form creating system 110 according to this embodiment. The settings on the arrangement of the blocks (graphs and the like) may be included in the items of the printing control data.

The patterns output as the result of the abovedescribed processing are divided into two main patterns, that is, a fixed graph output pattern and a variable graph output pattern. The fixed graph output pattern may be a pattern in which the graph per page in the business form to be created remains unchanged without depending on the settings, such as the above-described break point and the like. Meanwhile, the variable graph output pattern may be a pattern in which the graph per page in the business form to be created is changed at every break point or each time page feed is performed.

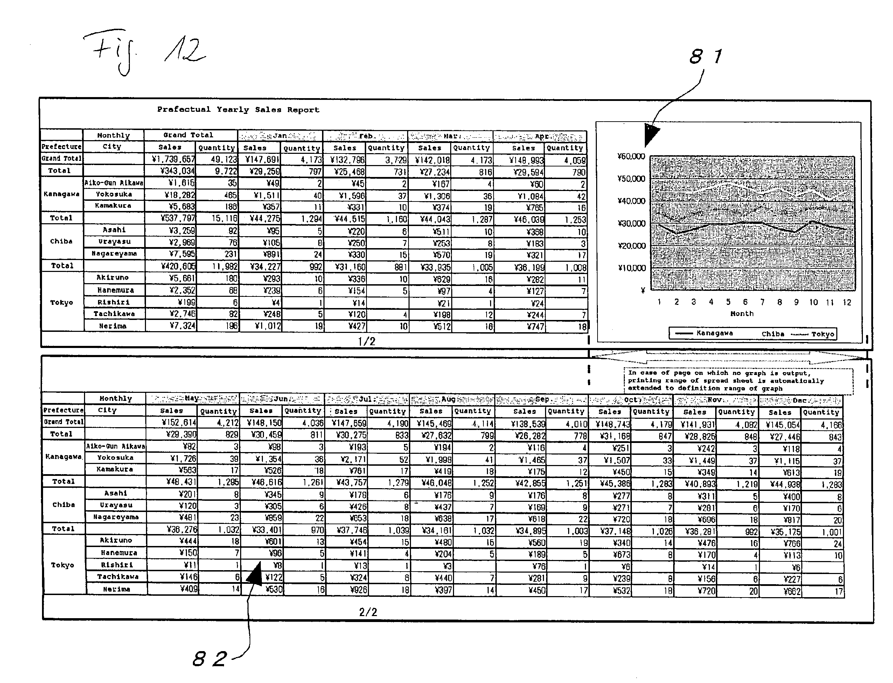

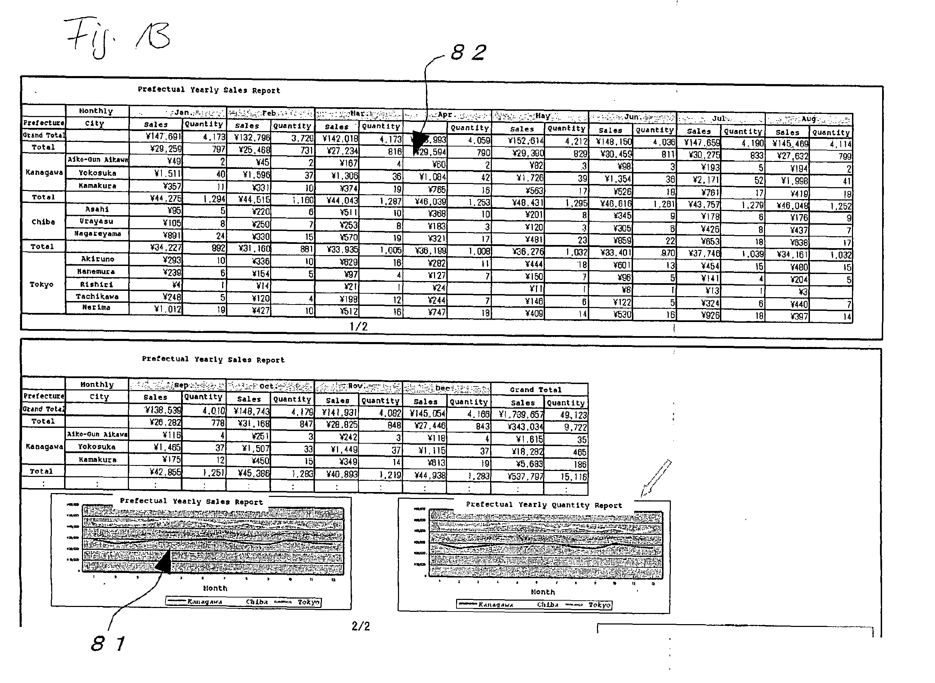

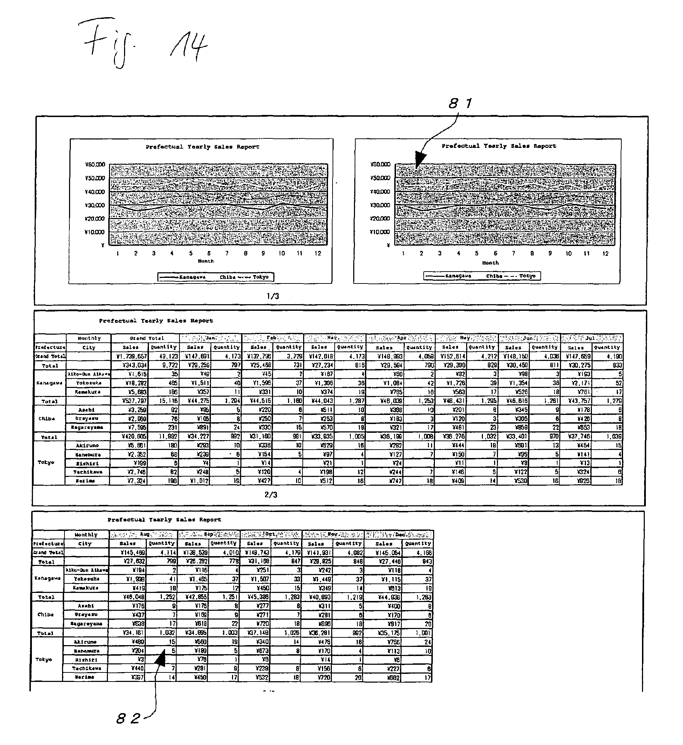

Figs. 12 to 14 show an exemplary output of a fixed graph output pattern. Specifically, Fig. 12 shows a case where a graph 81, which is obtained by graphicizing numeric data of a spreadsheet 82 in the business form to be created, is displayed on the first page. Fig. 13 shows a case where a graph is displayed on the last page of the business form, and Fig. 14 shows a case where a graph 81 is output on an exclusive-use page, on which only a graph is output.

Particularly, as shown in Fig. 12, when a graph is displayed on the first page, in case of subsequent pages, on which a graph is not output, the business form output managing unit 20 calculates the business form output information, and the form file creating unit 30 creates the form file on the basis of the calculated business form output information, such that the printing range of the spreadsheet 82 automatically extends to the definition range of the graph. Even though an exclusive-use page is set in the first page of the business form to output the graph is shown in Fig. 14, the graph output processing may be performed such that an exclusive-use page is arranged in the last page to output the graph.

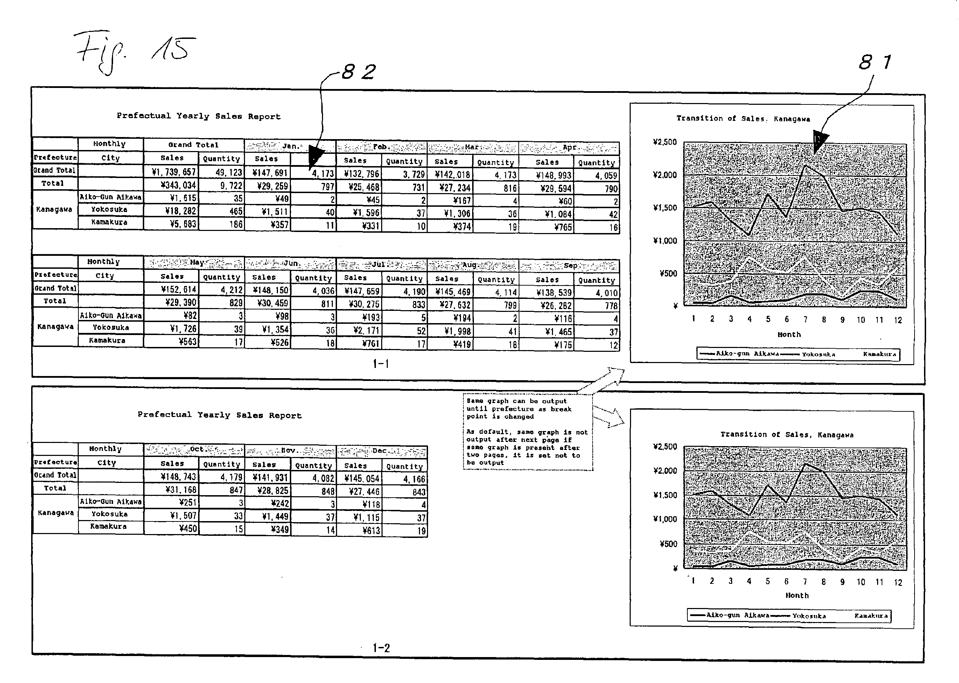

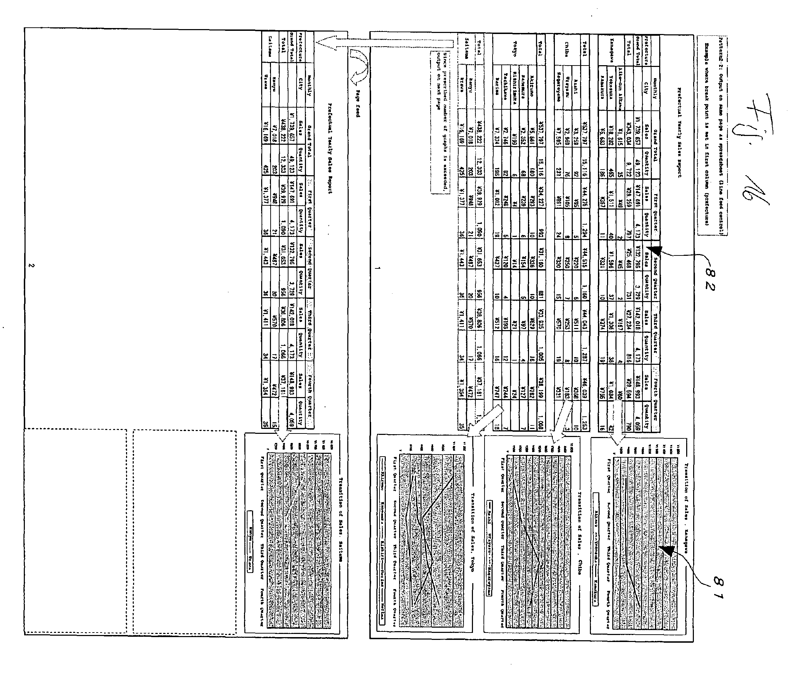

Figs. 15 and 16 show an exemplary output of a variable graph output pattern. Specifically, Fig. 15 shows a case where a spreadsheet 82 in a business form is segmented at a predetermined break and page-fed, and, to the same page as the segmented spreadsheet 82, a graph 81 corresponding to the spreadsheet 82 of the corresponding page is output. Fig. 16 shows a case where a spreadsheet in a business form is segmented at a predetermined break point and line-fed, and, to the same page as the segmented spreadsheet, a graph corresponding to the spreadsheet 82 of the corresponding page is output.

Particularly, Fig. 15 shows a case where the break point is set to an item 'Prefecture' in the first column of the spreadsheet. As shown in Fig. 15, the same graph can be output until the item 'Prefecture' as the break point is changed. In addition, when the same graph as the previous page is displayed, the graph may not be output on that page. In this example, 'Kanakawa Prefecture Sale Proceeds Change Table' of 'Kanakawa' is displayed on the first and second pages of the business form to be output. In addition, on the third and fourth pages, on which the spreadsheet of 'Chiba' or 'Tokyo', not 'Kanakawa', as the break point is displayed, the 'Sale Proceeds Change Tables' thereof is output.

The above-described graph output patterns may be included in the setting items of the printing control data. For example, information on whether the page, on which the graph is output, is the same page as the spreadsheet, the first page, the last page, the exclusive-use page (first output), or the exclusive-use page (last output) is included. Then, the business form output managing unit 20 calculated the business form output information on the basis of that information. Therefore, the form file of the business form can be created on the basis of the business form output information. With this processing, the graph output position can be freely set, thereby improving the viewability of the business form to be output.

### [Image Output Processing]

To achieve qualified and improved precision (understandability) of the business form, an image output processing according to this embodiment is to output an image (reference number 83 in Figs. 10A to 10E), such as a company logo or a photograph by capturing a product, to the business form to be output. This processing may be practically performed in the business form output managing unit 20 among the components of the business form creating system 110.

In an image processing according to this embodiment, images that are incorporated in a business form to be output are divided into two main types, that is, 'permanent image' and 'context image'.

The permanent image is stored in the business form creating system 110, and can be used as many times as needed. The permanent image may be suitable for a symbolic image, such as a company logo or an internal use-only mark. The permanent image may be added/deleted by a management interface and may be output using an ID, which is uniquely set when registration.

The context image is deleted when the session of the business form creating system 110 is closed. The context image may be suitable for image printing depending on output data, such as a product image or a graph. The context image may be registered by a callback interface when the business form creating system 110 is executed (that is, when a business form is output). Here, the callback interface means the flow of a processing that, when image data is needed in order that the business form creating system creates a business form, calls the external system in such a manner to call an event and acquires the image data.

As the images that can be output by the image output processing, images that are created in file formats, such as JPEG, PNG, BMP, and GIF may be exemplified, but other image data may be output. In addition, it is preferable to set whether or not to resize each image, for example, to resize at an unfixed aspect ratio, to simply resize, or to maintain the original size, while taking the visual quality (viewability) in the business form to be output.

The output size of the image to be output on the business form may be set in one of the setting items in the printing control data. Then, the output size of the image may be determined on the basis of the designated size according to the setting, the outputtable region, and the size of the original image. Specifically, the output size of the image may be determined a series of process that acquires the designated size in the pattern, then acquires the size of the image, and subsequently acquires the output size according to whether or not the image is resized.

### [Pattern Registration/Application Processing]

A pattern registration/application processing according to this embodiment is to allow rapid and easy layout design by registering, in the business form creating system 110, a template for defining the layout of the business form to be output, and reusing the registered template. This processing may be practically performed in the business form output managing unit 20 among the components of the business form creating system 110 according to this embodiment. Hereinafter, for convenience of explanation, the template is referred to as 'pattern', and a template management function is referred to as 'pattern registration'.

The patterns as data to be used in this processing may be created by templating the output format of a business form, which does not depend on the print data. The patterns may be created in a data structure, which has two types of information, that is, 'arrangement information' and 'format information'. Of these, the arrangement information is information for defining at which position on the business form the data is to be printed. The format information is used as information for defining the character size or the font, or the rules, such as the processing reference during page overflow. Here, the arrangement information may only be set by the patterns, and the contents thereof may not be changed by other factors. In addition, all the settings of the format information may be changed by the parameters during execution.

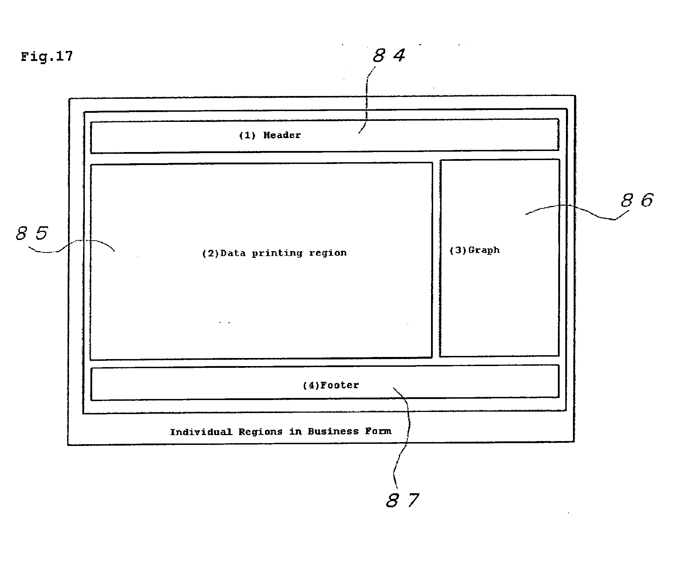

In view of the arrangement information, as shown in Fig. 17, the business form may be segmented and managed into four regions. Specifically, the printing region of the business form may be segmented and managed into the following four regions: a header region which is disposed at the top portion of the business form to occupy the full printing width and on which information on the business form, such as the title of the business form, various comments on printing conditions, or an image, for example, a logo, is output; a data printing region which occupies an area between the header and the footer, along with a graph region, and on which data is output; a graph region which occupies the area between the header and the footer, along with the data printing region, and on which a graph is output; and a footer region which is disposed the bottom portion of the business form to occupy the full printing width, and on which a page number is output.

For example, in creating a business form having the same arrangement as shown in Fig. 17, when a business form is output on an A4 paper (landscape) on the conditions that the margin 10 mm, the header 10%, the footer 5%, and data justification 85%, since a A4 paper (landscape) is vertical 210 mm × horizontal 297 mm, a printable region excluding a margin is as follows.
Vertical 210 mm - (10 mm × 2) = 190 mm
Horizontal 297 mm - (10 mm × 2) = 277 mm
From this, the printing region is calculated as follows.

### Header

Vertical 190 mm × 10% = 19 mm
Horizontal 277 mm

### Footer

Vertical 190 mm × 5% = 9.5 mm
Horizontal 277 mm

### Data

Vertical 190 mm × (100% - (10% + 5%)) = 161.5 mm
Horizontal 277 mm × 85% = 235.45 mm

### Graph

Vertical 190 mm × (100% - (10% + 5%)) = 161.5 mm
Horizontal 277 mm × (100% - 85%) = 41.55 mm

In this way, if the occupancy of each region is set with respect to the normal paper, the business form creating system 110 calculates the size of each region that is used to create the business form. The size of the region is not a numerical value, but it is designated by a ratio with respect to the paper. Therefore, it is possible to meet a situation where the printable size is changed due to an output paper.

Each region may include 'alignment information' for setting whether it is aligned at the top, bottom, left, or right, as well as the occupancy (the occupancy of each region in the paper).

Besides, the business form creating system 110 further performs detailed setting for a specific region, thereby improving the visual quality (viewability) of the business form to be output.

For example, the header region may have the following information: 'title printing position (horizontal/vertical) information' for setting left justification, center justification, right justification, top justification, and bottom justification in the horizontal and vertical directions; 'title font information' for setting the font size, the font type, the font style, and the character color; 'comment printing position (horizontal/vertical) information' for setting left justification, center justification, right justification, top justification, and bottom justification in the horizontal and vertical directions; 'comment font information' for setting the font size, the font type, the font style, and the character color; and 'image information' for setting the printing position of the image, such as the company logo or the product photograph, the image file name, and the like. Meanwhile, the footer region may have the following information: 'page number printing position (horizontal/vertical) information' for setting left justification, center justification, right justification, top justification, and bottom justification in the horizontal and vertical directions; and 'page number font information' for setting the font size, the font type, the font style, and the character color. Then, the business form creating system 110 creates the business form by reading the above-described information. As a result, a business form having improved viewability can be created.

In the format information, to improve the visual quality (visual quality) of the business form, the following basic information may be set, stored, and used.

That is, it is possible to store the following information: 'font relevant information' on the font, the character size, the character style, such as bold or italic, or the character color when being output to the business form; 'paper information' on the paper, such as the paper size, the paper direction, and the printing margin; when the data does not fully fit in the paper, 'control information during data overflow' for specifying any one of page feed, line feed, and paragraph feed; when the data does not fully fit in the paper, 'item column width calculation reference information' for specifying one of printing with reduced magnification, line break printing, and printable-digits printing; and other kinds of setting information on presence/absence of the ruled lines, the background color, or half toning.

In addition, the patterns when the business form is output are incorporated into the business form creating system 110, and are divided into 'permanent pattern' that cannot be corrected and deleted by the user, and 'user pattern' that is manually created by the user and can be corrected and deleted. The defined permanent patterns that are incorporated in the system in advance may be provided as one or at least two default patterns applied during execution in which no pattern is designated. Furthermore, the permanent patterns may be formed such that part of the individual control data may also be set to be overwritten.

### <Second Embodiment>: Network System

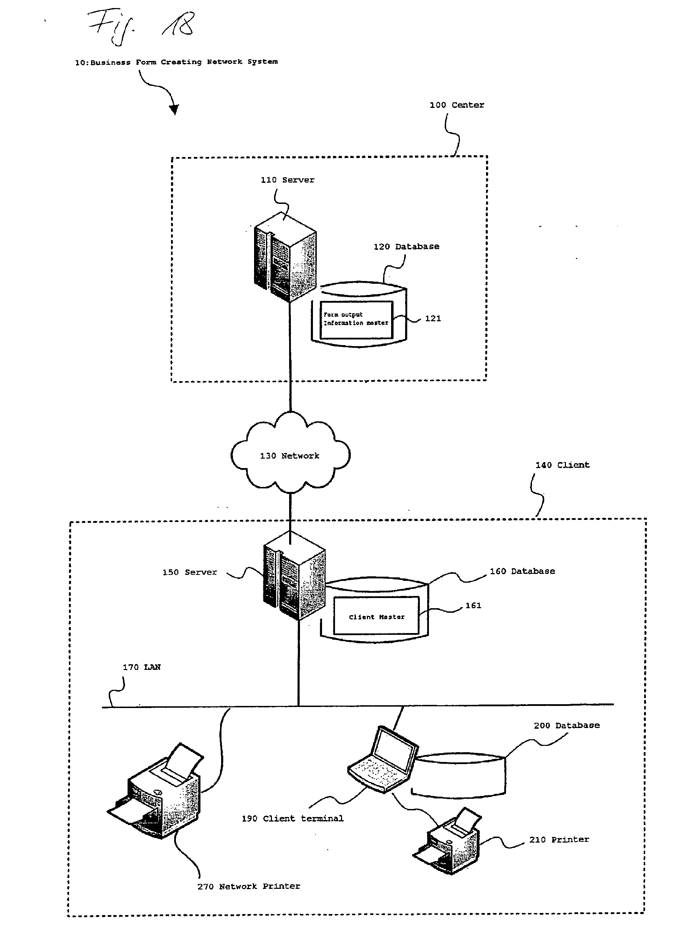

Next, a case where the business form creating system 110 is used as a server in a network system will be described in detail with reference to Fig. 18.

In a business form creating network system 10 according to this embodiment of the invention, one or more clients 140 are connected to a center 100 via a network 130, such as Internet or WAN. A server 110 is provided in the center 100, and a server 150 and a client terminal 190 are provided in each client 140. The server 110 and the server 150 are connected with each other via the network 130.

The server 110 includes a database 120 in a recording unit, and a business form output information master 121 that includes business form output information to be used to create the business form is recorded in the database. As the business form output information, for example, user resource management information, such as 'permanent pattern' information in the business form creating system 110, or management information, such as access log, printing log, user ID, and user management password are provided and stored.

The server 150 is connected with the client terminal 190 via a LAN 170. The LAN 170 is, for example, a private LAN or Intranet. Furthermore, a wide LAN, such as an inhouse LAN including a WAN, may be included.

The server 150 includes a database 160 in a recording unit, and a client master 161 that stores data (data as the base of the business form) created and used by an application, which processes the print data of the business form to be created, is provided in the database 160. In addition, the client terminal 190 includes a database 200 in a recording unit, and print data for creating the business form and printing control data are created and recorded in the database 200. Moreover, the print data and the printing control data may be recorded in the recording unit of the server 150. Furthermore, a printer 210 is connected to the client terminal 190, and a network printer 270 is connected to the LAN.

In the business form creating network system having the above-described configuration, the application in the server 150 is run according to an instruction from the client terminal 190 or an instruction from the server 150, and the print data for outputting the business form is created. In addition, the printing control data that is created by the client terminal 190 or recorded in the recording unit of the server 150 is read out, and the read printing control data is transmitted to the server 110, together with the print data.

The server 110 performs the above-described processing to automatically create a viewable business form. Then, the server 110 may transmit the created business form to the server 150 or the client terminal 190 in an electronic file format, or may output via the printer 210 or the network printer 270.

In addition, the business form creating network system may create the business form using an additional server that is connected to the network.

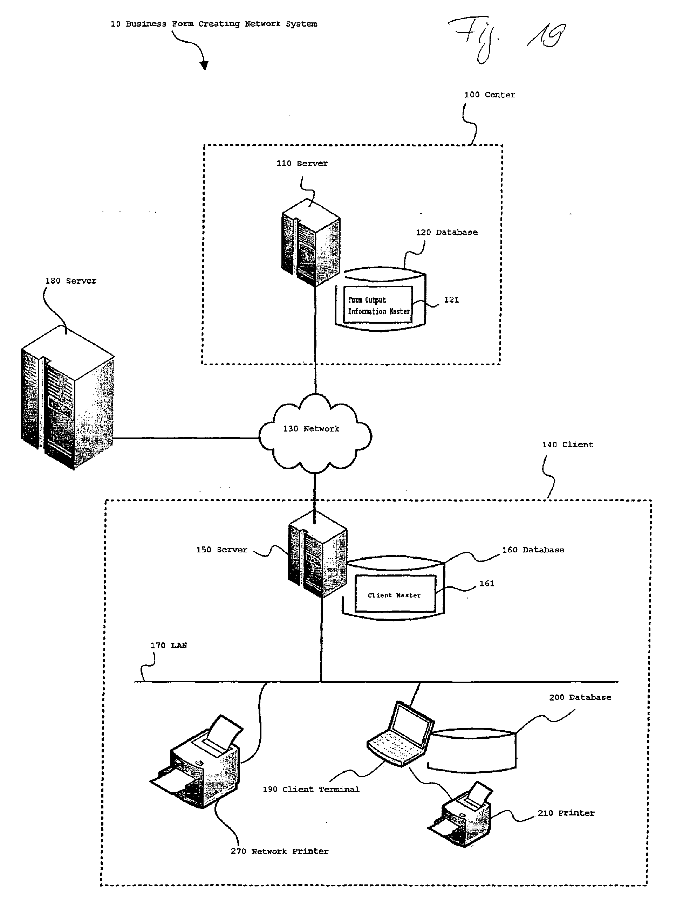

Fig. 19 shows a case where a server 180 for creating the print data to create the business form is additionally provided on the network. In this case, the external server 180 processes and corrects the data as the base of the business form, which is recorded in the client master 161 of the server 150, into the print data to create the business form. Then, the processed and corrected print data may be directly transmitted from the external server 180 to the server 110, or may be downloaded to the client terminal 190 (or the server 150) and then transmitted to the server 110 therefrom. In this case, particularly, the printing control data may be recorded in the recording unit of the server 110, or may be set by running the application in the server 110.

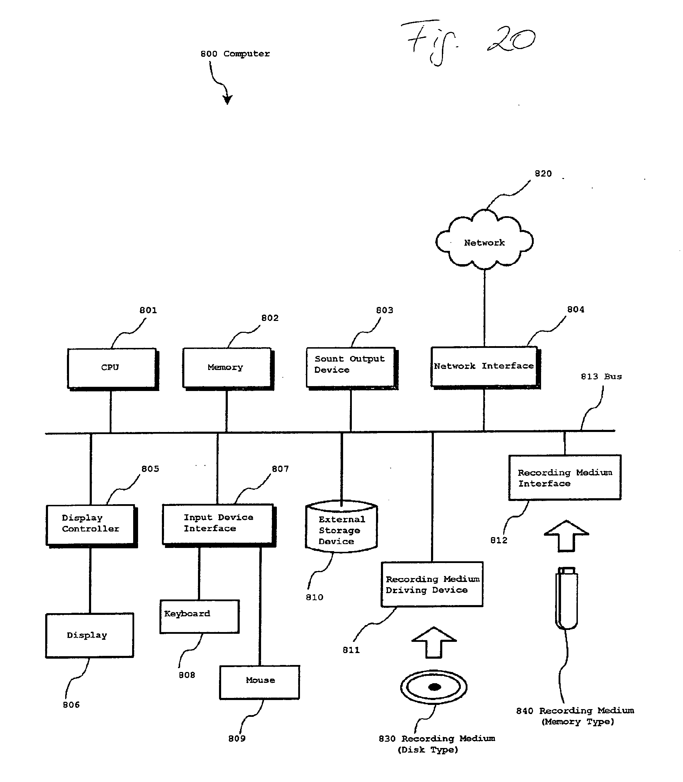

Next, the hardware configuration of a computer that is used in the server 110 (that is, the business form creating system 110), the server 150, or the client terminal 190 in the business form creating network system 10 will be described with reference to Fig. 20. However, a computer 800 shown in Fig. 20 is just an example of a computer that is used in the business form creating network system 10.

The computer 800 includes a CPU 801, a memory 802, a sound output device 803, a network interface 804, a display controller 805, a display device 806, an input device interface 807, a keyboard 808, a mouse 809, an external storage device 810, a recording medium driving device 811, a recording medium interface 812, and a bus 813 that connects the above components with each other. Moreover, in the case of the servers 110 and 150, at least the sound output device 803, the display controller 805, the display device 806, the input device interface 807, the keyboard 808, and the mouse 809 are not the essential components. Furthermore, in the case of the client terminals 190 and 260, at least the sound output device 803 is not the essential component.

The CPU 801 controls the operations of the components of the computer 800, controls to execute the programs under the control of the OS, and controls the operations of the components (server and client terminal) of the business form creating network system 10 according to the embodiment of the invention. The memory 802 is generally composed of a non-volatile memory, such as a ROM (Read Only Memory), and a volatile memory, such as a RAM (Random Access Memory). The ROM stores programs that are executed when the computer 800 starts. The RAM stores programs that are executed on the CPU 801 and implement the function of the server and client terminal according to this embodiment, or data that is used while the programs are executed.

The sound output device 803 is a device that output sound, for example, a speaker. The network interface 804 is an interface that is used for connection to a network 820. The network 820 corresponds to the network 130 shown in Fig. 1.

The display controller 805 is an exclusive-use controller that actually processes a plot command to be executed by the CPU 801. The plot data processed by the display controller 805 is temporarily written in a graphic memory, and then output to the display device 806. The display device 806 is, for example, is a display device that is composed of an LCD or a CRT. When the business form is provided in an electronic format, the display device 806 is used to display the business form.

The input device interface 807 receives a signal that is input from the keyboard 808 or the mouse 809, and transmits a predetermined command to the CPU 801 according to the signal pattern. The keyboard 808 or the mouse 809 is needed to operate a business application in the client terminal.

The external storage device 810 is, for example, a storage device, such as a hard disk drive (HDD). The above-described programs or data is recorded in the external storage device 810 and, if necessary, loaded on the RAM of the memory 802 during execution. A storage unit that stores the database 120 of the server 110 for recording print information, the database 160 of the server 150, and the database 200 of the client terminal 190 corresponds to the external storage device 810.

The recording medium driving device 811 accesses a recording surface of a portable disk type recording medium 830, such as CD (Compact Disc), MO (Magneto-Optical Disc), or DVD (Digital Versatile Disc), and reads data recorded thereon. The recording medium 830 may also store the programs for implementing the business form creating network system 10 according to the embodiment of the invention. The data recorded in the recording medium 830 is stored in the external storage device 810 via the recording medium driving device 811. In the case of the program, it is loaded on the RAM of the memory 802 during execution.

Alternatively, the programs for implementing the business form creating network system 10 according to the embodiment of the invention may be downloaded from a predetermined server on the network and stored in the external storage device 810 via the network 820 and the network interface 804, or may be directly executed. Similarly to the above-described programs, during execution, the programs stored via such a route are also loaded on the RAM of the memory 802 and then executed.

The recording medium interface 812 is connected to a portable memory type recording medium 840, which includes a semiconductor memory (for example, a flash memory), such as a USB memory, an SD memory, or a memory stick, by connection terminals, thereby reading data recorded therein. In the recording medium 840, similarly to the disk-type recording medium 830, a program that implements a business form creating network system 10 according to the embodiment of the invention may be recorded.

### BRIEF DESCRIPTION OF THE DRAWINGS

Fig. 1 is a schematic view showing the overall configuration of a business form creating system according to an embodiment of the invention;
Fig. 2 is a flowchart showing a process of calculating a column width of a business form to be output;
Fig. 3 is a diagram showing the flow of a process of calculating a column width of a business form to be output;
Figs. 4A and 4B are diagrams illustrating a line feed processing during data break;
Figs. 5A and 5B are diagrams illustrating a line feed processing during data break;
Figs. 6A and 6B are diagrams illustrating a line feed processing during data break;
Figs. 7A and 7B are diagrams illustrating a control processing during data overflow;
Figs. 8A to 8D are diagrams illustrating a control processing during data overflow;
Fig. 9 is a flowchart showing a maximum configuration processing;
Figs. 10A to 10E are diagram showing the flow of a process of executing a maximum configuration processing;
Figs. 11A to 11D are diagrams showing an example of a block arrangement change processing;
Fig. 12 is a diagram showing an exemplary output of a fixed graph output pattern;
Fig. 13 is a diagram showing an exemplary output of a fixed graph output pattern;
Fig. 14 is a diagram showing an exemplary output of a fixed graph output pattern;
Fig. 15 is a diagram showing an exemplary output of a variable graph output pattern;
Fig. 16 is a diagram showing an exemplary output of a variable graph output pattern;
Fig. 17 is a diagram showing segmentation management in allocation information;
Fig. 18 is a schematic view showing the overall configuration of a business form creating network system according to the embodiment of the invention;
Fig. 19 is a schematic diagram showing the overall configuration of another business form creating network system according to the embodiment of the invention; and
Fig. 20 is a schematic view showing the exemplary configuration of a computer that is used in a business form creating system and a business form creating network system.

### DESCRIPTION OF REFERENCE NUMERALS

10: business form creating network system
20: business form output managing unit
30: form file creating unit
40: business form creating unit
100: center
110: business form creating system
110: server
130: network
140: client
210: printer
270: network printer
800: computer

## Claims

1. A business form creating system that creates a business form from information described or created in an electronic format, the business form creating system comprising:
a business form output managing unit that produces business form output information based on:
printing control data which defines an output format of at least one of data to be described in fields and records of the business form to be output, and
print data including data to be described in the fields of the business form to be output,
wherein the business form output information including layout information of a business form to be output; and
a form file creating unit that creates a form file of the business form on the basis of the produced business form output information,
wherein the business form is created using the form file.

2. The business form creating system according to Claim 1, wherein the business form output managing unit produces at least one or all of the layout information, printing position information, and printing paper size and direction such that the output result of the business form falls within a printing region width of a normal printing paper.

3. The business form creating system according to Claim 1 or 2, wherein the business form output managing unit produces the business form output information including the layout information of the business form on the basis of any one or all of following information (1) to (5) acquired or calculated from the printing control data and the print data:
(1) information on the number of digits per column of printing object data in the business form to be output,
(2) line property information for identifying whether each line is header or body in the business form to be output,
(3) reference information for calculating the number-of-digits per column for identifying which one of all lines, lines excluding a header line, or body lines is a basis for calculating the number of digits of a specific column,
(4) font information including a font size and a font pitch to be used in outputting a business form, and
(5) processing information on out-of-printing width for specifying a process when data to be output in each record exceeds a column width.

4. A business form creating network system, wherein a business form data processing system (client) and the business form creating system (server) according to any one of claims 1 to 3 are connected to each other via a network, wherein the business form data processing system includes print data described in fields of a business form to be output,
wherein the business form data processing system transmits created print data to the business form creating system via the network,
wherein the business form creating system produces business form output information using the print data received from the business form data processing system, and then creates a form file of the business form, and
wherein the business form creating system in turn creates a business form in an electronic format on the basis of the created form file of the business form and the print data, and transmits the created business form to the business form data processing system.

5. A method of creating a business form, the method comprising steps of:
producing business form output information based on:
printing control data, which defines an output format of at least one of data to be described in fields and records of a business form to be output, and
print data having data to be described in the fields of the business form to be output
wherein the business form output information includes layout information of the business form to be output;
creating a form file of the business form on the basis of the produced business form output information; and
creating the business form using the form file.

6. The method according to Claim 5, wherein the form file of the business form is created on the basis of output format information for at least one of fields and records in the produced business form output information.

7. A program that causes a computer to execute:
producing business form output information based on:
printing control data, which defines an output format of at least one of data to be described in fields and records of a business form to be output, and
print data having data to be described in the fields of the business form to be output,
wherein the business form output information includes layout information of the business form to be output;
creating a form file of the business form on the basis of the produced business form output information; and
creating the business form using the form file.
